# EUROPEAN PATENT SPECIFICATION

(11) **EP 2 132 962 B1**
(45) Date of publication and mention of the grant of the patent: **29.02.2012**
(21) Application number: 08731328.4
(22) Date of filing: 04.03.2008
(51) Int. Cl.: H05B 39/04, H02M 5/293

(54) **Circuit with dimmable outlet and inductive load sensor**
Schaltung mit dimmbarer Steckdose und induktiver Last Sensor
Circuit gradateur avec prise de courant et capteur de charge inductive

(30) Priority: 05.04.2007 US 696772
(43) Date of publication of application: 16.12.2009
(73) Proprietor: MASCO CORPORATION, Taylor, MI 48180 (US)
(72) Inventor: XU, Jian, Windsor, Ont N9B 3V9 (CA); IOTT, Jeffrey, Monroe, MI 48162 (US)
(74) Representative: Croston, David
(86) International application number: PCT/US2008/055765
(87) International publication number: WO 2008/124225

(56) References cited:
- EP-A- 0 923 274
- WO-A-92/15052
- WO-A-2007/068040
- FR-A- 2 802 360
- FR-A- 2 856 236

## Description

This application relates to a circuit comprising a dimmable outlet and an inductive load sensor for sensing the presence of an inductive load and wherein the sensor looks for voltage spikes.

Electrical systems for providing control of lighting are known. Switches are typically provided for actuating the lights between on and off positions. One known switch is a dimmer switch. A dimmer switch may be actuated to change the intensity of the light across an infinite number of levels. Thus, a user of the space being lighted can adjust the light to a desirable level.

Dimmer switches are also associated with electrical outlets in some applications. As one example, builders will sometimes provide a dimmable electrical outlet as a way of providing dimmable light within a room. This is less expensive than providing a separate lighting circuit and switch. Thus, electrical outlets controlled by a dimmer switch are known.

One problem with such electrical outlets is that there is no way to guarantee a user will only utilize the electrical outlet for a light. As an example, the user may plug in some other load, such as a vacuum cleaner, hair dryer, etc.

When these loads are inductive, there can be some concern if the power delivered to the load is "dimmed" or lowered. Thus, it is known in prior art lighting control circuits to provide a sensor for sensing the presence of an inductive load at an electrical outlet associated with a dimmer switch. In the prior art, the presence of an inductive load is detected by looking at a phase difference. The systems for identifying an inductive load by looking at phase difference are relatively complex and expensive.

Furthermore, sensors identifying the presence of an inductive load by voltage spikes are known (see EP923274 or FR2856236). These sensors are usually associated with a universal dimmer switching over from "trailing edge" control to "leading edge" control.

According to the present invention, there is provided a circuit according to claim 1. An inductive load sensor for a dimmer circuit identifies the presence of an inductive load by voltage spikes. If an inductive load is sensed, the sensor stops the dimming of the load such that the power delivered to the inductive load is full "on" when the switch is turned on, or full "off" when the switch is off. In the disclosed embodiment, a voltage being delivered to the load is also placed on a line that is parallel to the load. This parallel path has a high impedance at lower voltages, but becomes conductive at higher voltages. Thus, at lower voltages, the power flows to the load. Once a voltage limit is reached, the parallel path becomes an effective conductive path.

When a voltage spike occurs, the limit for this path is met, and the path will become conductive. At this point, a signal circuit downstream of this path will communicate a signal that an inductive load is sensed. This signal is utilized to turn the dimmer circuit such that it no longer dims the power, but provides it in at full on or full off.

In a disclosed embodiment, the path is provided with at least one diode to achieve the impedance/conductivity feature. This may be a bi-directional zener diode (a transient voltage suppressor, or TVS). There are two TVSs in one embodiment, with one having a low voltage limit, and the other having a much higher voltage limit. The TVS with the low voltage limit is part of the signal circuit, such that when the sum of both limits are met, a voltage from the lower voltage TVS passes downstream through the signal circuit to generate the signal to move the dimmer circuit into a full on or full off state.

These and other features of the present invention can be best understood from the following specification and drawings, the following of which is a brief description.
Figure 1 is a block diagram of an overall lighting control system.
Figure 2 is a schematic of a dimmer circuit incorporated in a circuit according to the present invention.

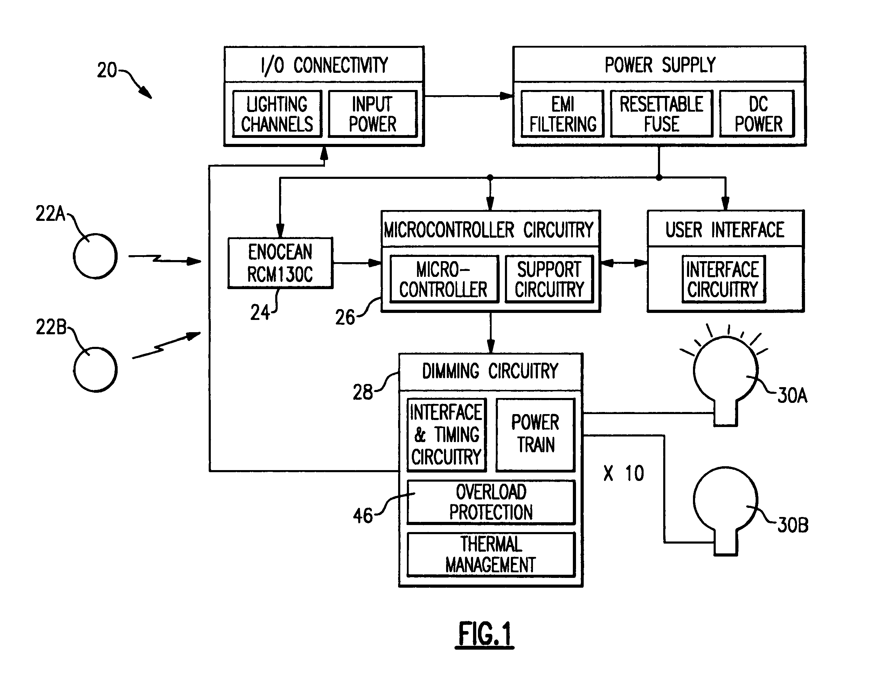

Figure 1 shows a lighting control circuit 20 for a building. As shown, a plurality of dimmer switches 22A, 22B, etc. communicate through a wireless connection to a multi-channel receiver and controller 24. This receiver may be as available from Enocean, and available for example under its Product No. RCM130C. The use of a wireless receiver and wireless switches are not limiting on this invention, but only mentioned as one possible type of system.

The receiver 24 communicates with a microcontroller 26, which in turn communicates with dimmer circuit 28. The dimmer circuit 28 controls the intensity of several lights 30A, 30B, etc. As shown within the dimmer circuit 28, there is a load protection 46. As mentioned above, one purpose of this load protection is to prevent damage to the load when an inductive load is connected to the circuit.

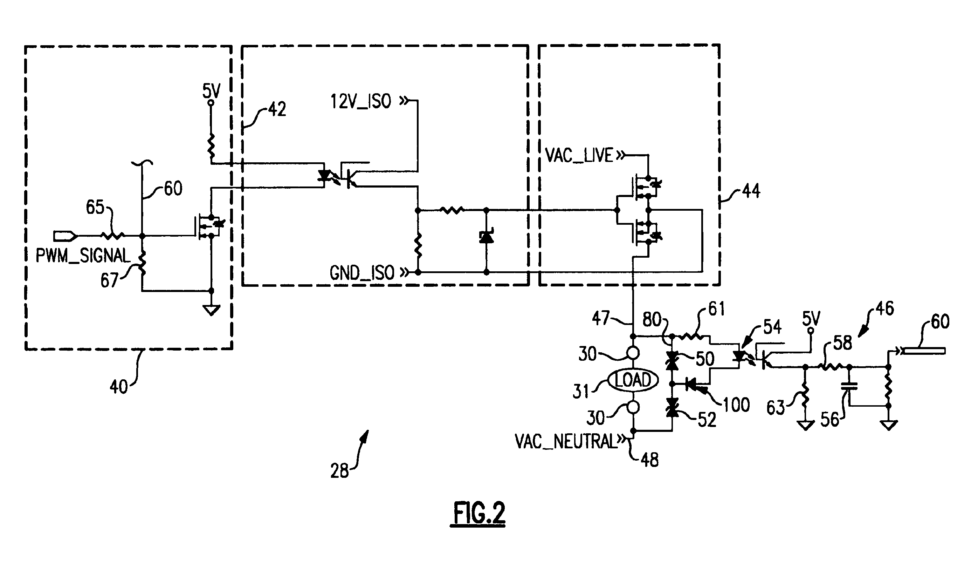

Dimmer circuit 28 is illustrated in Figure 2. As shown, a microcontroller creates a pulse width modulated signal input at box 40. This signal then communicates to dimmer portion (box 42), and a reverse phase control provided by a pair of MOSFETs (box 44). The circuit elements within boxes 40, 42 and 44 may be replaced by any dimmer circuit. However, in one embodiment, they may be as shown in Figure 2 and disclosed in co-pending patent application publication no. US2008-0224630A1, filed on March 13, 2007, naming Jian Xu, one of the co-inventors of this application, as its inventor, and entitled "Dimming Circuit for Controlling Electrical Power".

The output 47 of this dimmer circuit passes toward the load (31). As shown, the load (31) here is plugged into the terminals of an electrical outlet 30.

A pair of diodes 50 and 52 are positioned on a line 80 parallel to electrical outlet 31. One of the terminals of the electrical outlet is connected to neutral at 48, as known. The TVS 50 preferably has a high impedance, until a low voltage limit is met. The low voltage limit may be on the order of 5 volts, however, any other voltage may be utilized. The TVS 52 has a high impedance until a much higher voltage limit is met, on the order of hundreds of volts, for example. Again, the specific voltage should not be limiting on this invention, however in one embodiment, it was in the area of 200 volts for 120 volt AC power.

As long as there is no voltage spike received back upstream from the load (31), the dimming of the power directed through output 47 should occur normally.

Line 80 effectively clamps the power. If an inductive load, such as a vacuum cleaner motor, is plugged into the electrical outlet 30, then there will be back EMF pulses, when the load is "dimmed," which create voltage spikes.

When voltage spikes exceed the sum of the voltage limits of the TVS 50, and TVS 52, a voltage of the value of the TVS 50 will be supplied downstream into the signal circuit, and through an optical coupler 54 and resistor 63. The purpose of the capacitor 56 and resistor 58 is to provide a low pass filtering. Resistor 63, resistor 58 and capacitor 56 together provide time constant control over the output to an output indicator line 60. A resistor 61 is provided to limit the current.

The voltage from the TVS diode 50 is coupled to the resistor 63, and creates a signal on the line 60.

As shown for example in the box 40, the line 60 can communicate back into the intersection of resistors 65 and 67. This is but one way of achieving turning the dimming circuitry off such that full power is delivered to the output 47 when a signal is put on the output line 60. Any other method of using the signal on line 60 to stop dimming may be used.

Notably, Figure 2 discloses a circuit which would detect positive voltage spikes. It is possible that the load 31 could create both negative and positive spikes. A circuit design with similar functionality could be designed to detect negative spikes, or to detect both positive and negative spikes. In the Figure 2 circuit, the diode 100 would block the flow of negative spikes. By reversing the direction of the diode 100 and the photo diode in 54, the circuit can be changed to detect negative spikes rather than positive spikes. It is expected that most inductive loads would create both positive and negative spikes, thus the detection of one or other should be sufficient.

While the invention is disclosed in a building lighting system, which would typically operate under AC power, it should also be understood that the present invention can operate with DC power.

While a particular type of diode is disclosed for the elements 50 and 52, anything that can clamp a voltage up until a voltage limit is met can be utilized.
Examples of other appropriate components include varistors, such as MOVs (metal oxide varistors).

Although a preferred embodiment of this invention has been disclosed, a worker of ordinary skill in this art would recognize that certain modifications would come within the scope of this invention. For that reason, the following claims should be studied to determine the true scope of this invention.

## Claims

1. A circuit (20) comprising:
a dimmable electrical outlet (30),
an inductive load sensor (46) which senses the presence of an inductive load (30A, 30B, 31) at the electrical outlet (30) by identifying a voltage spike, and a signal being sent when an inductive load (30A, 30B, 31) is sensed; and
a dimmer circuit (28) for providing an ability to dim the electrical output of the electrical outlet (30), the dimmer circuit (28) being controlled by a dimmer switch (22A, 22B);
**characterised in that** the dimmer circuit (28) has a first state, wherein dimming is enabled, and a second state, wherein dimming is disabled by the signal such that the electrical output of the electrical outlet (30) is in:
a full ON state when the dimmer switch (22A, 22B) is turned ON, or;
a full OFF state when the dimmer switch (22A, 22B) is turned OFF.

2. The circuit (20) as set forth in claim 1, in which a plurality of dimmer switches (22A, 22B) are provided for directing a user control signal to a controller (26), said controller communicating with the dimmer circuit (28), said dimmer circuit (28) providing an ability to dim the electrical output of the electrical outlet (30) based upon a request for such dimming by said user control signal.

3. The circuit (20) as set forth in claim 1 or 2, wherein a line (80) is provided parallel to both terminals of the electrical output of the electrical outlet (30) and includes elements (50, 52) that have a high impedance below a voltage limit, and are more conductive above the voltage limit.

4. The circuit (20) as set forth in claim 3, wherein the elements (50, 52) are diodes.

5. The circuit (20) as set forth in claim 4, wherein there are two diodes (50, 52) mounted in series on said line (80).

6. The circuit (20) as set forth in claim 5, wherein a first of said diodes (52) has a higher voltage limit than does a second of said diodes (50).

7. The circuit (20) as set forth in claim 6, wherein said second diode (50) supplies a voltage downstream into a signal circuit when the total voltage limits of both said diodes (50, 52) are exceeded.

8. The circuit (20) as set forth in claim 5, wherein said diodes (50, 52) are bi-directional zener diodes.

9. The circuit (20) as set forth in claim 1 or 2, wherein the dimmer circuit operates with AC power.

10. The circuit (20) as set forth in claim 2, wherein said plurality of dimmer switches (22A, 22B) provide a wireless signal to a receiver (24), said receiver (24) communicating with said controller (26).

11. A method of operating a lighting control circuit (20) comprising the steps of:
providing a dimmable electrical outlet (30),
providing a dimmer circuit (28) for dimming the power provided to the electrical outlet (30), the dimmer circuit (28) being controlled by a dimmer switch (22A, 22B);
providing an inductive load sensor (46),
sensing the presence of an inductive load (30A, 30B, 31) in the electrical output of the electrical outlet (30), using the inductive load sensor (46), by identifying a voltage spike,
sending a signal when an inductive load is sensed using the inductive load sensor,
**characterised by**;
disabling dimming in response to the signal when an inductive load is sensed such that the electrical output of the electrical outlet (30) is in:
a full ON state when the dimmer switch (22A, 22B) is turned ON, or;
or a full OFF state when the dimmer switch (22A, 22B) is turned OFF.

12. The method as set forth in claim 11, wherein a line (80) is provided parallel to both terminals of the electrical outlet (30) and includes elements (50, 52) that have a high impedance below a voltage limit, and are conductive above the voltage limit.

## Patentansprüche

1. Schaltung (20), umfassend:
eine dimmbare Steckdose (30),
einen Induktivlastsensor (46), der das Vorhandensein einer induktiven Last (30A, 30B, 31) an der Steckdose (30) durch Identifizieren einer Spannungsspitze erfasst, und wobei ein Signal gesendet wird, wenn eine induktive Last (30A, 30B, 31) erfasst wird; und
eine Dimmerschaltung (28) zum Bereitstellen einer Fähigkeit zum Dimmen des elektrischen Ausgangs der Steckdose (30), wobei die Dimmerschaltung (28) durch einen Dimmerschalter (22A, 22B) gesteuert ist;
**dadurch gekennzeichnet, dass** die Dimmerschaltung (28) einen ersten Zustand, in dem das Dimmen aktiviert ist, und
einen zweiten Zustand, in dem das Dimmen durch das Signal deaktiviert ist, so dass der elektrische Ausgang der Steckdose (30)
in einem vollen EIN-Zustand ist, wenn der Dimmerschalter (22A, 22B) eingeschaltet ist, oder
in einem vollen AUS-Zustand ist, wenn der Dimmerschalter (22A, 22B) ausgeschaltet ist,
aufweist.

2. Schaltung (20) gemäß Anspruch 1, wobei eine Vielzahl von Dimmerschaltern (22A, 22B) dazu bereitgestellt sind, ein Benutzer-Steuersignal zu einer Steuerung (26) zu richten, wobei die Steuerung mit der Dimmerschaltung (28) kommuniziert, wobei die Dimmerschaltung (28) eine Fähigkeit zum Dimmen des elektrischen Ausgangs der Steckdose (30) auf Basis einer Aufforderung zu einem solchen Dimmen durch das Benutzer-Steuersignal bereitstellt.

3. Schaltung (20) gemäß Anspruch 1 oder 2, wobei eine Leitung (80) parallel zu beiden Anschlüssen des elektrischen Ausgangs der Steckdose (30) bereitgestellt ist und Elemente (50, 52) aufweist, die unterhalb einer Spannungsgrenze eine hohe Impedanz aufweisen und oberhalb der Spannungsgrenze leitfähiger sind.

4. Schaltung (20) gemäß Anspruch 3, wobei die Elemente (50, 52) Dioden sind.

5. Schaltung (20) gemäß Anspruch 4, wobei zwei Dioden (50, 52) in Serie an der Leitung (80) angebracht sind.

6. Schaltung (20) gemäß Anspruch 5, wobei eine erste der Dioden (52) eine höhere Spannungsgrenze aufweist als eine zweite der Dioden (50).

7. Schaltung (20) gemäß Anspruch 6, wobei die zweite Diode (50) eine Spannung nachgeschaltet in eine Signalschaltung zuführt, wenn die summierten Spannungsgrenzen (50, 52) der beiden Dioden überschritten sind.

8. Schaltung (20) gemäß Anspruch 5, wobei die Dioden (50, 52) bidirektionale Zenerdioden sind.

9. Schaltung (20) gemäß Anspruch 1 oder 2, wobei die Dimmerschaltung mit Wechselstromleistung arbeitet.

10. Schaltung (20) gemäß Anspruch 2, wobei die Vielzahl von Dimmerschaltern (22A, 22B) einem Empfänger (24) ein Drahtlossignal zuführen, wobei der Empfänger (24) mit der Steuerung (26) kommuniziert.

11. Verfahren zum Betreiben einer Lichtsteuerschaltung (20), umfassend die Schritte:
Bereitstellen einer dimmbaren Steckdose (30),
Bereitstellen einer Dimmerschaltung (28) zum Dimmen der der Steckdose (30) zugeführten Leistung, wobei die Dimmerschaltung (28) durch einen Dimmerschalter (22A, 22B) gesteuert wird;
Bereitstellen eines Induktivlastsensors (46),
Erfassen des Vorhandenseins einer induktiven Last (30A, 30B, 31) in dem elektrischen Ausgang der Steckdose (30) unter Verwendung des Induktivlastsensors (46) durch Identifizieren einer Spannungsspitze,
Senden eines Signals bei Erfassung einer induktiven Last unter Verwendung des Induktivlastsensors,
**gekennzeichnet durch**:
Deaktivieren des Dimmens in Reaktion auf das Signal, wenn eine induktive Last erfasst wird, so dass der elektrische Ausgang der Steckdose (30)
in einem vollen EIN-Zustand ist, wenn der Dimmerschalter (22A, 22B) eingeschaltet ist; oder
in einem vollen AUS-Zustand ist, wenn der Dimmerschalter (22A, 22B) ausgeschaltet ist.

12. Verfahren gemäß Anspruch 11, wobei eine Leitung (80) parallel zu beiden Anschlüssen der Steckdose (30) bereitgestellt ist und Elemente (50, 52) aufweist, die unterhalb einer Spannungsgrenze eine hohe Impedanz aufweisen und oberhalb der Spannungsgrenze leitfähig sind.

## Revendications

1. Circuit (20) comprenant :
une prise électrique gradable (30),
un détecteur de charge inductive (46), qui détecte la présence d'une charge inductive (30A, 30B, 31) à la prise électrique (30) en identifiant une pointe de tension et un signal, qui est envoyé lorsqu'une charge inductive (30A, 30B, 31) est détectée, et
un circuit gradateur (28) rendant possible la gradation de la sortie électrique de la prise électrique (30), le circuit gradateur (28) étant commandé par un interrupteur gradateur (22A, 22B),
**caractérisé en ce que** le circuit gradateur (28) dispose d'un premier état, dans lequel la gradation est activée et d'un second état, dans lequel la gradation est désactivée par le signal de manière que la puissance électrique de sortie de la prise électrique (30) se trouve:
dans un état pleinement ON, lorsque l'interrupteur gradateur (22A, 22B) est placé sur ON, ou
dans un état pleinement OFF, lorsque l'interrupteur gradateur (22A, 22B) est placé sur OFF.

2. Circuit (20) suivant la revendication 1, dans lequel une pluralité d'interrupteurs gradateurs (22A, 22B) est prévue pour acheminer un signal de commande d'utilisateur à un contrôleur (26), ledit contrôleur communiquant avec le circuit gradateur (28), ledit circuit gradateur (28) rendant possible la gradation de la sortie électrique (30) basée sur une requête d'effectuer une gradation par ledit signal de commande d'utilisateur.

3. Circuit (20) suivant la revendication 1 ou 2, dans lequel est prévue une ligne (80) parallèle aux deux terminaux de sortie électrique de la prise électrique (30), ligne qui inclut des éléments (50, 52) ayant une impédance élevée au-dessous d'une limite de tension et étant davantage conducteurs au-dessus de la limite de tension.

4. Circuit (20) suivant la revendication 3, dans lequel les éléments (50, 52) sont des diodes.

5. Circuit (20) suivant la revendication 4, dans lequel il y a deux diodes (50, 42) montées en série sur ladite ligne (80).

6. Circuit (20) suivant la revendication 5, dans lequel une première desdites diodes (52) présente une limite de tension plus élevée qu'une seconde desdites diodes (50).

7. Circuit (20) suivant la revendication 6, dans lequel ladite seconde diode (50) fournit une tension en aval, à un circuit de signal lorsque l'ensemble des limites de tension des deux dites diodes (50, 52) est excédé.

8. Circuit (20) suivant la revendication 5, dans lequel lesdites diodes (50, 52) sont des diodes Zener bidirectionnelles.

9. Circuit (20) suivant la revendication 1 ou 2, dans lequel le circuit gradateur fonctionne avec de la puissance de courant alternatif.

10. Circuit (20) suivant la revendication 2, dans lequel ladite pluralité d'interrupteurs gradateurs (22A, 22B) fournit un signal sans fil à un récepteur (24), ledit récepteur (24) communiquant avec ledit contrôleur (26).

11. Procédé d'exploitation d'un circuit de commande d'éclairage (20) comprenant les étapes consistant à :
Prévoir une prise électrique gradable (30),
Prévoir un circuit gradateur (28) pour la gradation de la puissance fournie à la prise électrique (30), le circuit gradateur (28) étant commandé par un interrupteur gradateur (22A, 22B),
Prévoir un détecteur de charge inductive (46),
Détecter la présence d'une charge inductive (30A, 30B, 31) dans la sortie électrique de la prise électrique (30) en utilisant le détecteur de charge inductive (46) par identification d'une pointe de tension,
Envoyer un signal lorsqu'une charge inductive est détectée en utilisant le détecteur de charge inductive,
**caractérisé par**
la désactivation de la gradation en réponse au signal, lorsque est détectée une charge inductive telle que la sortie électrique de la prise électrique (30) est :
dans un état pleinement ON, lorsque l'interrupteur gradateur (22A, 22B) est placé sur ON, ou
dans un étant pleinement OFF, lorsque l'interrupteur gradateur (22A, 22B) est placé sur OFF.

12. Procédé suivant la revendication 1, dans lequel est prévue une ligne (80) parallèle aux deux terminaux de la prise électrique (30), qui inclut des éléments (50, 52) ayant une impédance élevée au-dessous d'une limite de tension et étant conducteurs au-dessus de la limite de tension.
